(19) Europäisches Patentamt
European Patent Office
Office européen des brevets

(11) **EP 4 202 386 A1**

(12) **EUROPEAN PATENT APPLICATION**
published in accordance with Art. 153(4) EPC

(43) Date of publication:
**28.06.2023 Bulletin 2023/26**

(21) Application number: **21886006.2**

(22) Date of filing: **19.10.2021**

(51) International Patent Classification (IPC):
**G01K 11/24** (2006.01)　　　**G01N 29/024** (2006.01)
**G01P 5/24** (2006.01)

(52) Cooperative Patent Classification (CPC):
**G01K 11/24; G01N 29/024; G01P 5/24**

(86) International application number:
**PCT/JP2021/038667**

(87) International publication number:
**WO 2022/091887 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.10.2020 JP 2020181745**

(71) Applicant: Daikin Industries, Ltd.
**Osaka-shi, Osaka 530-0001 (JP)**

(72) Inventors:
• **HIEI Takehiko**
  **Osaka-shi, Osaka 530-8323 (JP)**
• **KUROI Kiyoshi**
  **Osaka-shi, Osaka 530-8323 (JP)**
• **SASAI Yuta**
  **Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **ENVIRONMENT CONDITION MEASUREMENT DEVICE**

(57)　An environment condition measurement device includes: a controller (60) configured to obtain an environmental condition of a target space (10) based on a propagation time from when a transmitter (30) transmits a sound wave to when a receiver (40) receives the sound wave. The receiver (40) is a directional receiver with a directivity with respect to a sound wave incident at a predetermined incident angle.

FIG.6

**EP 4 202 386 A1**

**Description**

TECHNICAL FIELD

The present disclosure relates to an environment condition measurement device.

BACKGROUND ART

Devices that measure the environmental conditions of a space using sound waves are typically known. An environment condition measurement device according to Patent Document 1 includes: a transmitter that transmits sound waves to a space and a receiver that receives the sound waves transmitted by the transmitter. The environment condition measurement device measures, as an environmental condition, a temperature distribution in the room based on the propagation time of the sound waves from when the transmitter transmits the sound waves to when the receiver receives the sound waves.

CITATION LIST

PATENT DOCUMENT

Patent Document 1: Japanese Unexamined Patent Publication No. H11-173925

SUMMARY OF THE INVENTION

TECHNICAL PROBLEMS

The environment condition measurement device as disclosed in Patent Document 1 requires an improvement in the accuracy in measuring the environmental conditions. It is an objective of the present disclosure to improve the accuracy of an environment condition measurement device in measuring the environmental conditions.

SOLUTION TO THE PROBLEMS

A first aspect of the present disclosure is directed to an environment condition measurement device including: a transmitter (30) configured to transmit a sound wave to a target space (10); a receiver (40) configured to receive the sound wave transmitted by the transmitter (30); and a controller (60) configured to obtain an environmental condition of the target space (10) based on a propagation time from when the transmitter (30) transmits the sound wave to when the receiver (40) receives the sound wave, the receiver (40) being a directional receiver with a directivity with respect to a sound wave incident at a predetermined incident angle.

In the first aspect, the receiver (40) has the directivity with respect to the sound wave incident at the predetermined incident angle. Accordingly, the receiver (40) receives, with a high sensitivity, the sound wave incident at this incident angle. As a result, the controller (60) obtains the propagation time of this sound wave accurately.

A second aspect is an embodiment of the first aspect. In the environment condition measurement device according to the second aspect, the receiver (40) has directivities with respect to respective sound waves through a plurality of propagation paths ($P_m$) and with incident angles different from each other.

In the second aspect, the receiver (40) has the directivities with respect to the respective sound waves through the propagation paths ($P_m$) and with incident angles different from each other, thereby receiving different sound waves at the same time. This results in a shorter time period for obtaining the propagation time, as compared to the case of sequentially receiving the sound waves through different propagation paths.

A third aspect is an embodiment of the first or second aspect. The environment condition measurement device according to the third aspect further includes: a storage (61) configured to store data on the plurality of propagation paths ($P_m$) and the incident angles for the plurality of propagation paths ($P_m$) in association with each other.

In the third aspect, the propagation paths ($P_m$) and the incident angles of the sound waves received by the receiver (40) through these propagation paths ($P_m$) are associated with each other. The storage (61) stores the data containing these in association with each other.

A fourth aspect is an embodiment of the third aspect. In the environment condition measurement device according to the fourth aspect, the controller (60) executes first processing of obtaining a propagation time of a sound wave according to an incident angle on the receiver (40) based on the data stored in the storage (61).

In the fourth aspect, the controller (60) associates with each other the propagation times and the propagation paths ($P_m$) which are associated with the incident angles, using the data stored in the storage (61).

A fifth aspect is an embodiment of any one of the first to fourth aspects. In the environment condition measurement device according to the fifth aspect, the controller (60) repeatedly executes the first processing a plurality of times and obtains the environmental condition of the target space (10) based on the propagation times obtained in the plurality of times of the first processing, at satisfaction of a condition that an index indicating a difference between the propagation times of the sound wave obtained in the plurality of times of the first processing is smaller than a predetermined value.

In the fifth aspect, the controller (60) repeatedly executes the first processing, which provides the index indicating the change in the propagation time. If this index is smaller than the predetermined value, the controller (60) obtains the environmental condition of the target space (10) based on the propagation time obtained in the first processing. Note that the "first processing" here is targeted at at least one of the plurality of times of the first processing executed to obtain the index indicating change in the propagation time.

A sixth aspect is an embodiment of any one of the first to fifth aspects. In the environment condition measurement device according to the sixth aspect, the receiver (40) includes a plurality of receivers (40), and the controller (60) obtains the environmental condition of the target space (10) based on propagation times of sound waves received by the plurality of receivers (40).

In the sixth aspect, the plurality of receivers (40) are used, which increases the number of the propagation paths ($P_m$) for obtaining the environmental condition. Accordingly, the controller (60) measures the environmental condition accurately.

A seventh aspect is an embodiment of any one of the first to sixth aspects. In the environment condition measurement device according to the seventh aspect, the transmitter (30) includes a plurality of transmitters (30), and the plurality of transmitters (30) transmit sound waves at different timings from each other.

In the seventh aspect, the plurality of transmitters (30) transmit the sound waves at different timings from each other, thereby reducing the interference among the sound waves. This results in accurate measurement of the environmental condition.

An eighth aspect is an embodiment of any one of the first to sixth aspects. In the environment condition measurement device according to the eighth aspect, the transmitter (30) includes a plurality of transmitters (30), and the plurality of transmitters (30) generate, at a same timing, sound waves with frequencies different from each other or sound waves of pseudorandom signals.

In the eighth aspect, the plurality of transmitters (30) transmit the sound waves at the same time. Having frequencies different from each other or being pseudorandom signals, the sound waves are distinguishable from each other after being received by the receivers (40). This reduces the time period for obtaining the propagation time, as compared to the case of receiving the sound waves at different times.

A ninth aspect is an embodiment of any one of the first to eighth aspects. In the environment condition measurement device according to the ninth aspect, the environmental condition is at least one of a wind velocity or an air temperature.

In the ninth aspect, the controller (60) measures, as the environmental condition, at least one of the wind velocity or the air temperature in the target space (10) based on the propagation time.

BRIEF DESCRIPTION OF THE DRAWINGS

FIG. 1 is a layout diagram of an environment condition measurement device according to an embodiment.
FIG. 2 is a block diagram of the environment condition measurement device.
FIG. 3 is a schematic view illustrating a function of a receiver.
FIG. 4 is a flowchart of a measurement operation.
FIG. 5 is a timing chart of first processing.
FIG. 6 corresponds to FIG. 1 and illustrates an operation in the first processing.
FIG. 7 is a conceptual diagram showing a relationship among measurement spaces, propagation paths, and propagation path lengths according to the embodiment.
FIG. 8 corresponds to FIG. 7 and illustrates a first variation.
FIG. 9 corresponds to FIG. 5 and illustrates a second variation.

DESCRIPTION OF EMBODIMENT

An embodiment will be described below with reference to the drawings. The following embodiment is merely an exemplary one in nature, and is not intended to limit the scope, applications, or use of the present invention.

«Embodiment»

<Outline of General Configuration>

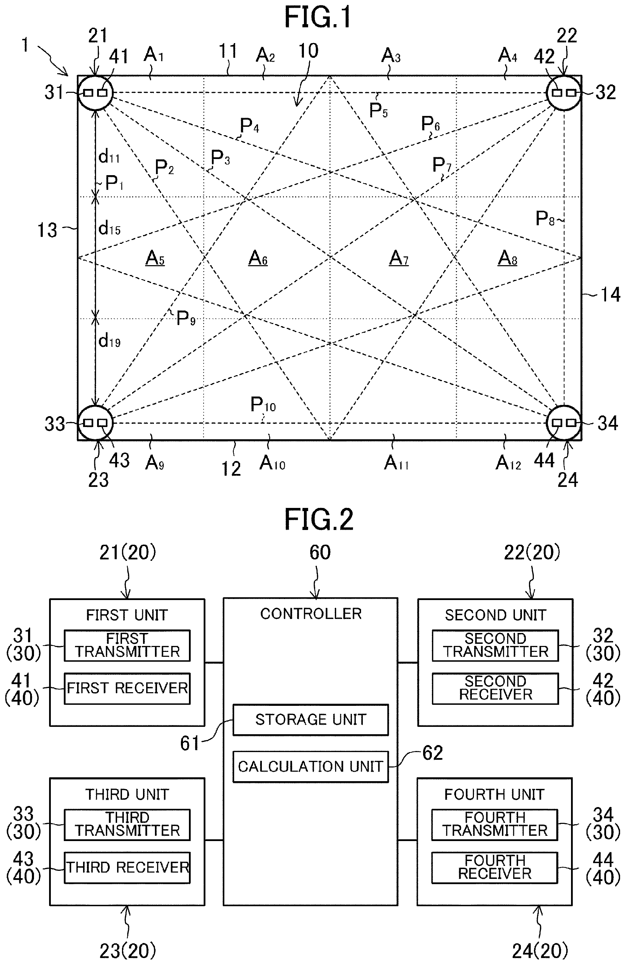

An environment condition measurement device (1) according to this embodiment measures the environmental conditions of a target space using sound waves. As shown in FIG. 1, the target space according to this embodiment is an indoor space (10). The environmental conditions include the wind velocity and the air temperature in the indoor space (10). An air treatment system (not shown) is placed in the indoor space (10). The air treatment system includes a ventilation system, an air conditioner, an air cleaner, and other equipment. As shown in FIG. 1, the indoor space (10) according to this example is in a rectangular shape in a plan view. The indoor space (10) has first, second, third, and fourth side surfaces (11), (12), (13), and (14). The first and second side surfaces (11) and (12) face each other, while the third and fourth side surfaces (13) and (14) face each other.

As shown in FIG. 2, the environment condition measurement device (1) includes a plurality of units (20), a coordinate measurer (50), and a controller (60).

<General Configuration of Unit>

As shown in FIG. 1, the plurality of units (20) include first, second, third, and fourth units (21), (22), (23), and (24). Hereinafter, the first to fourth units may be simply referred to as "units (20)".

In this example, each of the units (20) is placed at a corner of the indoor space (10). Specifically, the first unit (21) is placed at the corner between the first and third side surfaces (11) and (13). The second unit (22) is placed at the corner between the first and fourth side surfaces (11) and (14). The third unit (23) is placed at the corner between the second and third side surfaces (12) and (13). The fourth unit (24) is placed at the corner between the second and fourth side surfaces (12) and (14).

The environment condition measurement device (1) includes a plurality of freestanding poles for supporting the respective units (20). Each of the poles extends vertically. Each pole has an adjustment mechanism for adjusting the height of the associated unit (20). The heights of the units (20) are preferably set at the same height by the adjustment mechanisms.

Each unit (20) includes one transmitter (30) and one receiver (40). Specifically, the first unit (21) includes a first transmitter (31) and a first receiver (41). The second unit (22) includes a second transmitter (32) and a second receiver (42). The third unit (23) includes a third transmitter (33) and a third receiver (43). The fourth unit (24) includes a fourth transmitter (34) and a fourth receiver (44). Hereinafter, the first to fourth transmitters may be simply referred to as "transmitters (30)". The first through fourth receivers may be referred to simply as "receivers (40)".

<Transmitter>

Each of the transmitters (30) transmits sound waves for measuring a wind velocity and a temperature. Each of the transmitters (30) is an omni-directional transmitter. Here, the "omni-directional transmitter" not only transmits the sound waves directed at a certain angle but widely transmits the sound waves across a predetermined angle range. Each transmitter (30) transmits sound waves in such an angle range that the receivers (40) of all the other units (20) can receive the sound waves. Each transmitter (30) according to this example generates sound waves across the range of about 90° in a plan view.

The first transmitter (31) transmits sound waves in a range from the first side surface (11) to the third side surface (13). The second transmitter (32) transmits sound waves in a range from the first side surface (11) to the fourth side surface (14). The third transmitter (33) generates sound waves in a range from the second side surface (12) to the third side surface (13). The fourth transmitter (34) transmits sound waves in a range from the second side surface (12) to the fourth side surface (14).

<Receiver>

The receivers (40) receive the sound waves transmitted from the transmitters (30). Each of the receivers (40) is a directional receiver. The directional receiver (40) identifies and receives the sound waves arriving at a predetermined incident angle.

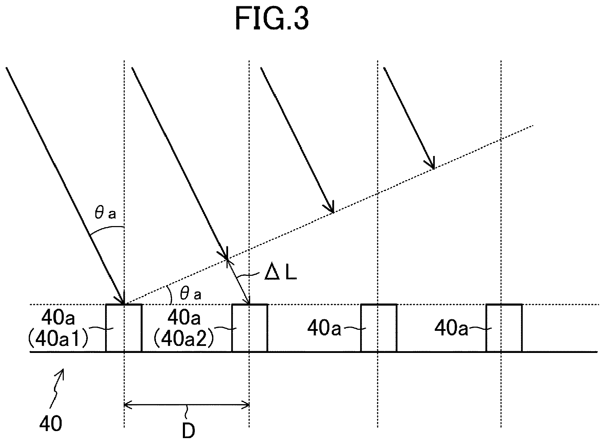

In addition, each receiver (40) identifies and receives a plurality of sound waves with different incident angles $\theta$. As schematically shown in FIG. 3, each receiver (40) includes a plurality of microphone elements (40a). The microphone elements (40a) are aligned at equal intervals on a substrate. With this configuration, the receiver (40) identifies the sound waves incident at a predetermined incident angle. Specifically, for example, assume that D is the distance between first and second microphone elements (40a1) and (40a2) adjacent to each other, $\theta a$ is the incident angle of the sound waves, and ΔL is a reach difference. The reach difference ΔL is the remaining distance for the sound waves to reach the second microphone element (40a) when arriving at the first microphone element (40a). In this case, the difference (i.e., an arrival time difference ΔTa) between the time when the sound waves arrive at the first microphone element (40a1) and the time when the sound waves arrive at the second microphone element (40a2) can be expressed by the following equation.

$$\text{Arrival Time Difference } \Delta Ta = \text{Reach Difference } \Delta L / \text{Sound Velocity C0}$$

$$\text{where Reach Difference } \Delta L = D \times \sin\theta a$$

Each receiver (40) obtains the arrival time difference ΔTa for each microphone element (40a) incident at the incident angle θa, and combines the waveforms of the sound waves to complement the delay of the arrival time difference ΔTa for the microphone element (40a). Specifically, the receiver (40) combines the waveforms delayed by ΔTa from the waveforms of the sound waves received by the first microphone element (40a) and the waveforms of the sound waves received by the second microphone element (40b). Accordingly, the receiver (40) receives, with a directivity, the sound waves at a predetermined incident angle. Execution of this processing on a plurality of sound waves incident at different incident angles, in parallel, allows the receiver (40) to receive, with a directivity, the plurality of sound waves incident at the different incident angles.

The sound waves received by the receivers (40) include direct waves and reflected waves. The direct waves are sound waves that are transmitted from the transmitters (30) and then reach the receivers (40) without colliding with any wall surface of the indoor space (10), for example. The reflected waves are sound waves that are transmitted from the transmitters (30), reflected by any of the wall surfaces (specifically, the first to fourth side surfaces (11, 12, 13, and 14)) of the indoor space (10), and then reach the receivers (40).

<Coordinate Measurer>

The coordinate measurer (50) shown in FIG. 2 measures the three-dimensional coordinates indicating the shape of the indoor space (10) and the three-dimensional coordinates indicating the positions of the units (20). The coordinate measurer (50) is a three-dimensional laser measuring device.

<Controller>

The controller (60) corresponds to the "control unit" according to the present disclosure. The controller (60) includes a microcomputer mounted on a control board and a memory device (specifically, a semiconductor memory) that stores software for operating the microcomputer. The controller (60) is connected to the units (20) and the coordinate measurer (50) via wireless or wired communication lines.

The controller (60) includes a storage (61) and a calculation unit (62). The storage (61) stores, as three-dimensional data, the three-dimensional coordinates measured by the coordinate measurer (50). The storage (61) stores a plurality of propagation paths ($P_m$), the propagation path lengths ($d_{mn}$) of these propagation paths ($P_m$), and the incident angles of the sound waves on the receivers (40) for these propagation paths ($P_m$) in association with each other.

The calculation unit (62) obtains the wind velocity and the air temperature in the indoor space (10) based on the data stored in the storage (61) and the propagation times of the sound waves through the respective propagation paths ($P_m$).

-Measurement Operation-

An operation of measuring the environmental conditions using the environment condition measurement device (1) will be described.

<Basic Operation>

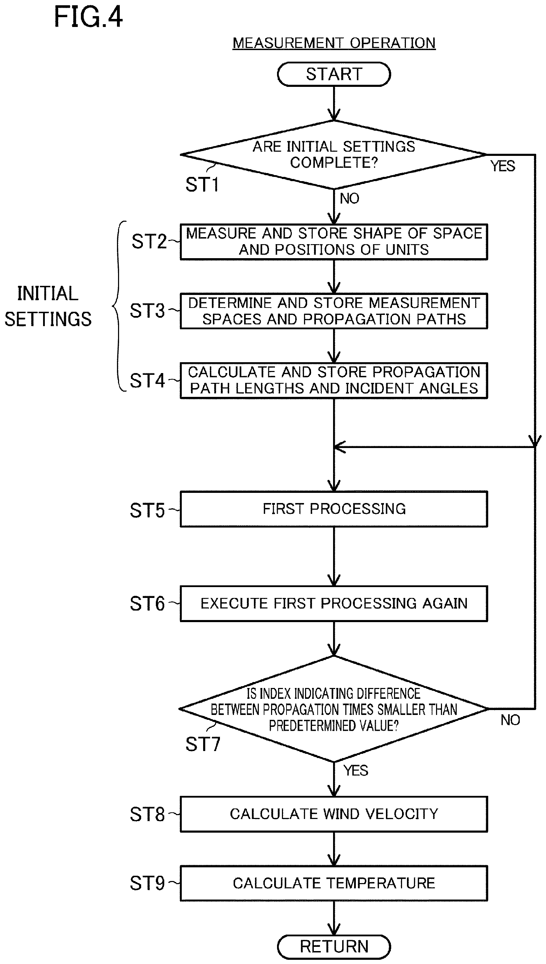

As shown in FIG. 4, if incomplete in step ST1, the initial settings of the controller (60) in steps ST2 to ST4 are executed.

In step ST2, the coordinate measurer (50) measures the three-dimensional coordinates indicating the shape of the indoor space (10) and the positions of the units (20). The storage (61) stores, as coordinate data, the three-dimensional coordinates measured in step ST2.

In step ST3, the calculation unit (62) divides the indoor space (10) into a plurality of measurement spaces ($A_n$)

(where n = 1, 2, ... n) based on the coordinate data. For example, in FIG. 1, the indoor space (10) is divided into twelve measurement spaces ($A_1$ to $A_{12}$) in plan view. In addition, in step ST3, the calculation unit (62) determines propagation paths ($P_m$) (where m = 1, 2, ... m) of the sound waves based on the coordinate data. The calculation unit (62) determines a plurality of propagation paths ($P_m$) so that one or more of the propagation paths ($P_m$) pass through each measurement space ($A_n$). The storage (61) stores, as coordinate data, the three-dimensional coordinates of the divisional measurement spaces ($A_n$) and the three-dimensional coordinates of the determined propagation paths ($P_m$).

FIG. 1 shows ten propagation paths ($P_1$ to $P_{10}$). Among these propagation paths ($P_1$ to $P_{10}$), the first, third, fifth, seventh, eighth, and tenth propagation paths ($P_1$), ($P_3$), ($P_5$), ($P_7$), ($P_8$), and ($P_{10}$) are for direct waves. The second, fourth, sixth, and ninth propagation paths ($P_2$), ($P_4$), ($P_6$), and ($P_9$) are for indirect waves reflected by any of the side surfaces (11, 12, 13, and 14). In the environment condition measurement device (1) according to this embodiment, the transmitters (30) and the receivers (40) are arranged so that the sound waves reciprocate in these propagation paths ($P_m$).

In step ST4, the calculation unit (62) calculates the propagation path lengths ($d_{mn}$) of the propagation paths ($P_m$) in the respective measurement spaces ($A_n$) determined in step ST3. The propagation path lengths ($d_{mn}$) are the lengths of the paths obtained by dividing the entire propagation path ($P_m$) for the measurement spaces ($A_n$). FIG. 1 illustrates the propagation path length of the first propagation path ($P_1$). The first propagation path ($P_1$) passes through the first, fifth, and ninth measurement spaces ($A_1$), ($A_5$), and ($A_9$). In this case, the propagation path length of the first propagation path ($P_1$) are the sum of $d_{11}$, dis, and $d_{19}$. The first propagation path ($P_1$) has the total length $L_1$ of $d_{11}$ + dis + $d_{19}$.

In step ST4, the calculation unit (62) obtains the propagation path lengths ($d_{mn}$) based on the coordinate data stored in the storage (61). In addition, the calculation unit (62) calculates the incident angles θ of the sound waves incident on the receivers (40) after passing through the plurality of propagation paths ($P_m$), based on the coordinate data. In step ST4, the storage (61) stores, as initial data, the propagation paths ($P_m$), the incident angles associated with these propagation paths ($P_m$), and the propagation path lengths ($d_{mn}$) of these propagation paths ($P_m$) in association with each other.

In step ST5, first processing is executed. The first processing is to measure the propagation time of the sound waves passing through each of the propagation paths ($P_m$). Here, the propagation time is from when one of the transmitters (30) transmits the sound waves to when the corresponding receivers (40) receive these sound waves. Details of the first processing will be described later. In step ST6, the first processing is executed again.

In step ST7, the controller (60) determines whether the wind velocity and temperature in each of the measurement spaces ($A_n$) are stable. The controller (60) obtains an index indicating the degree of change in the propagation time obtained in the plurality of times of the first processing. The controller (60) determines whether a first condition that the index is smaller than a predetermined value is satisfied.

Specifically, the calculation unit (62) calculates the difference ΔT between a propagation time T1 measured for each propagation path ($P_m$) in step ST5 and a propagation time T2 measured for the propagation path ($P_m$) in step ST6. The calculation unit (62) further calculates an average ΔT-ave of the differences ΔT calculated above. If this average ΔT-ave is smaller than a predetermined value, it can be determined that there is almost no change in the propagation time through each propagation path ($P_m$) and the wind velocity and temperature are stable. At the satisfaction of the first condition (YES in step ST7), the controller (60) sequentially calculates the wind velocities and temperatures in the respective measurement spaces ($A_n$).

In step ST8, the calculation unit (62) calculates the wind velocity in each measurement space ($A_n$) based on the propagation time obtained in the first processing immediately before the satisfaction of the condition in step ST7.

In step ST9, the calculation unit (62) calculates the temperature in each measurement space ($A_n$) based on the propagation time T2 obtained in the first processing immediately before the satisfaction of the condition in step ST7.

As described above, the processing in steps ST5 to ST9 allows obtainment of the wind velocities and temperatures in the respective measurement spaces ($A_n$) which are stable. Accordingly, the wind velocity distribution and the temperature distribution in the indoor space (10) can be measured accurately.

<First Processing>

The first processing described above will be described in detail. In the first processing, the controller (60) causes the transmitters (30) to sequentially transmit sound waves. The receivers (40) receive the sound waves through the associated propagation paths ($P_m$).

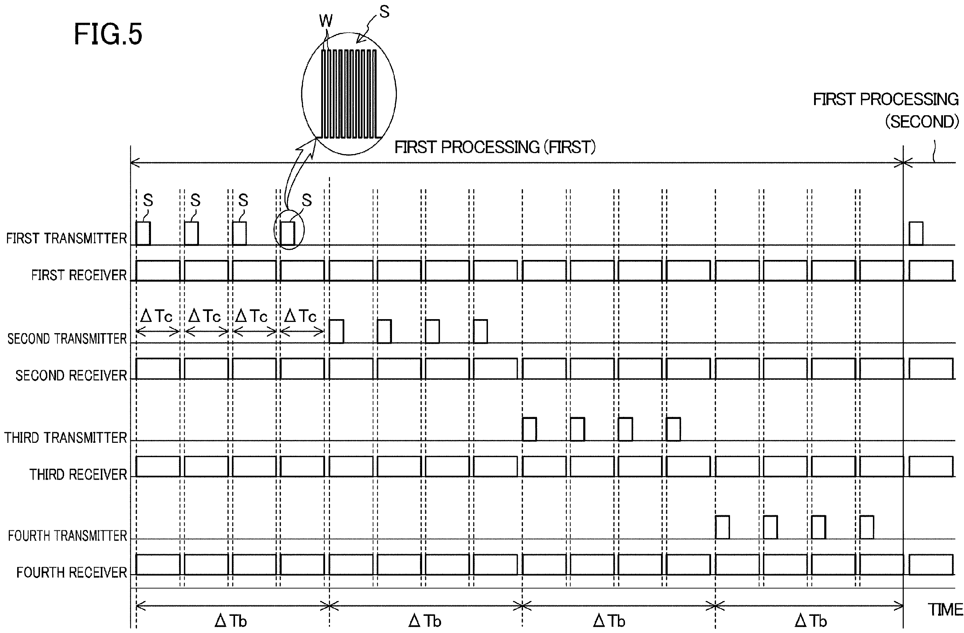

Specifically, as shown in FIG. 5, in the environment condition measurement device (1), the first, second, third, and fourth transmitters (31), (32), (33), and (34) sequentially transmit sound waves. Each of the transmitters (30) emits a group of sound waves in a period ΔTb. The group of sound waves includes a plurality of (four in this example) sound waves (S). Each transmitter (30) transmits the sound waves (S) at predetermined intervals. Each sound wave (S) is composed often waves (W). In synchronization with the transmission of the sound waves by each transmitter (30), the receivers (40) become ready to receive the sound waves in the reception period ΔTc. In this example, when each transmitter (30) transmits the group of sound waves, all the receivers (40) become ready to receive the sound waves.

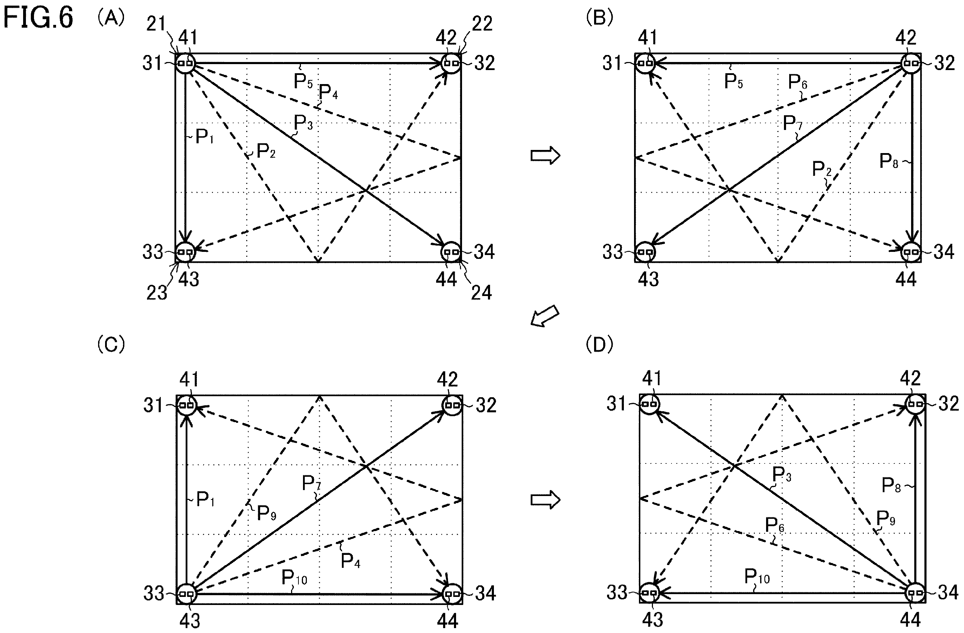

FIG. 6 shows an example operation of sequentially transmitting sound waves from the transmitters (30). In FIG. 6, solid arrows represent direct waves, while broken arrows represent indirect waves.

As shown in (A) of FIG. 6, the first omni-directional transmitter (31) transmits sound waves across the range of about 90°. The sound waves transmitted from the first transmitter (31) flow outward through the first, second, third, fourth, and fifth propagation paths $(P_1)$, $(P_2)$, $(P_3)$, $(P_4)$, and $(P_5)$. The second receiver (42) receives the sound waves that have flowed outward through the second and fifth propagation paths $(P_2)$ and $(P_5)$. The third receiver (43) receives the sound waves that have flowed outward through the first and fourth propagation paths $(P_1)$ and $(P_4)$. The fourth receiver (44) receives the sound waves that have flowed outward through the third propagation path $(P_3)$.

As shown in (B) of FIG. 6, the second omni-directional transmitter (32) then transmits sound waves across the range of about 90°. The sound waves transmitted from the second transmitter (32) flow outward through the sixth, seventh, and eighth propagation paths $(P_6)$, $(P_7)$ and $(P_8)$ and flow back through the second and fifth propagation paths $(P_2)$ and $(P_5)$. The first receiver (41) receives the sound waves that have flowed back through the second and fifth propagation paths $(P_2)$ and $(P_5)$. The third receiver (43) receives the sound waves that have flowed outward through the seventh propagation path $(P_7)$. The fourth receiver (44) receives the sound waves that have flowed outward through the sixth and eighth propagation paths $(P_6)$ and $(P_8)$.

As shown in (C) of FIG. 6, the third omni-directional transmitter (33) then transmits sound waves across the range of about 90°. The sound waves transmitted from the third transmitter (33) flow outward through the ninth and tenth propagation paths $(P_9)$ and $(P_{10})$, and flow back through the first, fourth, and seventh propagation paths $(P_1)$, $(P_4)$, and $(P_7)$. The first receiver (41) receives the sound waves that have flowed back through the first and fourth propagation paths $(P_1)$ and $(P_4)$. The second receiver (42) receives the sound waves that have flowed back through the seventh propagation path $(P_7)$. The fourth receiver (44) receives the sound waves that have flowed back through the ninth and tenth propagation paths $(P_9)$ and $(P_{10})$.

As shown in (D) of FIG. 6, the fourth omni-directional transmitter (34) then transmits sound waves across the range of about 90°. The sound waves transmitted from the fourth transmitter (34) flow back through the third, sixth, eighth, ninth, and tenth propagation paths $(P_3)$, $(P_6)$, $(P_8)$, $(P_9)$ and $(P_{10})$. The first receiver (41) receives the sound waves that have flowed back through the third propagation path $(P_3)$. The second receiver (42) receives the sound waves that have flowed back through the sixth and eighth propagation paths $(P_6)$ and $(P_8)$. The third receiver (43) receives the sound waves that have flowed back through the ninth and tenth propagation paths $(P_9)$ and $(P_{10})$.

In the first processing described above, the calculation unit (62) measures the propagation times of the sound waves incident on the respective receivers (40) at predetermined incident angles. As described above, the storage (61) stores, as initial data, the propagation paths $(P_m)$, the incident angles associated with the propagation paths $(P_m)$, and the propagation path lengths $(d_{mn})$ of the propagation paths $(P_m)$ in association with each other. Thus, with the use of the initial data and the propagation times through the incident angles, further association of the propagation paths $(P_m)$ with the propagation times through the propagation paths $(P_m)$ is possible. Accordingly, the first processing allows easier identification of the propagation times through the propagation paths $(P_m)$.

This example allows measurement of each propagation time (i.e., an outward propagation time $(Td_m)$ (where m = 10)) through the outward paths of the first to tenth propagation paths $(P_m)$ and each propagation time (i.e., a return propagation time $(Te_m)$ (where m = 10)) through the return paths of the first to tenth propagation paths $(P_m)$. Accordingly, in step ST7 described above, to be exact, the calculation unit (62) determines whether the first condition is satisfied based on the difference between the outward propagation times $(Td_m)$ obtained in the two times of the first processing and the difference between the return propagation times $(Te_m)$ obtained in the two times of the first processing. In step ST7, the controller (60) may determine whether the first condition is satisfied based on only the difference between the outward propagation times $(Td_m)$ obtained in the two times of the first processing. Alternatively, the controller (60) may determine whether the first condition is satisfied based only on the difference between the return propagation times $(Te_m)$ obtained in the two times of the first processing.

-How to Calculate Wind Velocity-

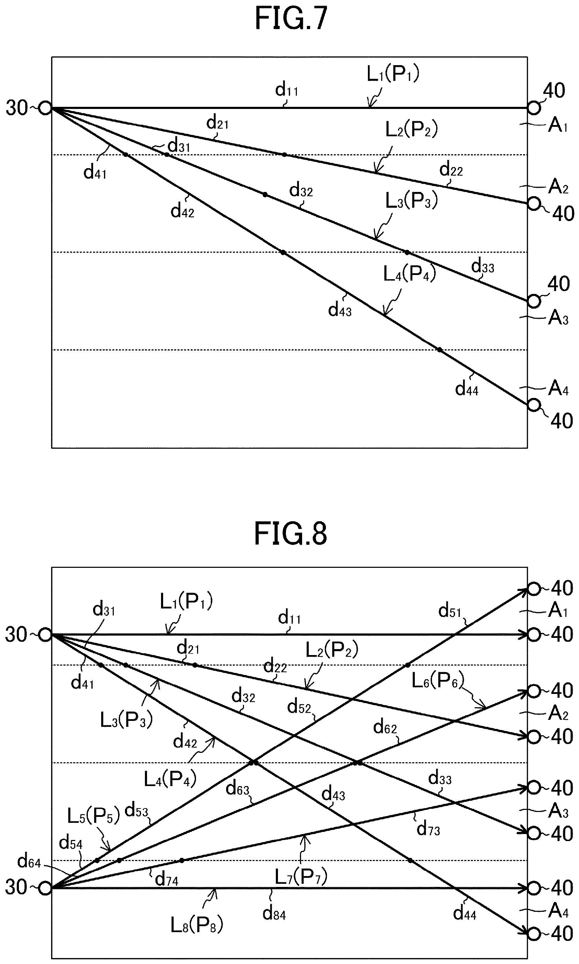

How to calculate the wind velocity in each measurement space $(A_n)$ in step ST8 will be described with reference to FIG. 7. For the sake of simplicity, FIG. 7 shows a simplified configuration of the environment condition measurement device (1) according to the embodiment. In FIG. 7, the indoor space (10) is divided into four measurement spaces $(A_n)$ (where n = 1 to 4). In FIG. 7, there are four propagation paths $(P_m)$ (where m = 1 to 4) between one transmitter (30) and four receivers (40). Each of the propagation path $(P_m)$ includes outward and return paths. The four propagation paths $(P_m)$ have propagation path lengths $d_{mn}$ (where m = 1 to 4 and n = 1 to 4) in the respective measurement spaces $(A_n)$.

In this case, the first propagation path $(P_1)$ has the total length $(L_1)$ of $d_{11}$. The second propagation path $(P_2)$ has the total length $(L_2)$ of $d_{21} + d_{22}$. The third propagation path $(P_3)$ has the total length $(L_3)$ of $d_{31} + d_{32} + d_{33}$. The fourth propagation path $(P_4)$ has the total length $(L_4)$ of $d_{41} + d_{42} + d_{43} + d_{44}$.

With respect to the outward paths of the propagation paths ($P_m$), the following relational equations [Math 1] hold, where $Cd_n$ (where n = 1 to 4) represents the propagation velocities of the sound waves in the respective measurement spaces ($A_n$), and ($Td_m$) (where m = 1 to 4) represents the outward propagation times obtained in the first processing.

[Math 1]

$$
\begin{bmatrix} Td_1 \\ Td_2 \\ Td_3 \\ Td_4 \end{bmatrix} = \begin{bmatrix} d_{11} & 0 & 0 & 0 \\ d_{21} & d_{22} & 0 & 0 \\ d_{31} & d_{32} & d_{33} & 0 \\ d_{41} & d_{42} & d_{43} & d_{44} \end{bmatrix} \begin{bmatrix} 1/Cd_1 \\ 1/Cd_2 \\ 1/Cd_3 \\ 1/Cd_4 \end{bmatrix}
$$

With the use of the least squares, for example, based on the simultaneous equations of [Math 1], the propagation velocities ($Cd_n$) in the respective measurement spaces ($A_n$) can be obtained.

With respect to the return paths of the propagation paths ($P_m$), the following relational equations [Math 2] hold, where $Ce_n$ (where n = 1 to 4) represents the propagation velocities of the sound waves in the respective measurement spaces ($A_n$), and ($Te_m$) (where m = 1 to 4) represents the outward propagation times obtained in the first processing.

[Math 2]

$$
\begin{bmatrix} Te_1 \\ Te_2 \\ Te_3 \\ Te_4 \end{bmatrix} = \begin{bmatrix} d_{11} & 0 & 0 & 0 \\ d_{21} & d_{22} & 0 & 0 \\ d_{31} & d_{32} & d_{33} & 0 \\ d_{41} & d_{42} & d_{43} & d_{44} \end{bmatrix} \begin{bmatrix} 1/Ce_1 \\ 1/Ce_2 \\ 1/Ce_3 \\ 1/Ce_4 \end{bmatrix}
$$

With the use of the least squares, for example, based on the simultaneous equations of [Math 2], the propagation velocities ($Ce_n$) in the respective measurement spaces ($A_n$) can be obtained.

The propagation velocities ($Cd_n$) through the outward paths in the respective measurement spaces ($A_n$) can be expressed by the following Equation (A).

$$Cd_n = C0 + \alpha \times t_n + V_n \ldots (A)$$

Here, C0 represents the sound velocity (331.5 [m/sec]), $t_n$ (where n = 1 to 4) represents the temperatures in the respective measurement spaces ($A_n$), $V_n$ (where n = 1 to 4) represents the wind velocities in the respective measurement spaces ($A_n$), and $\alpha$ is a coefficient.

The wind velocities through the return paths in the measurement spaces ($A_n$) are opposite to that those through the outward paths in the measurement spaces ($A_n$). Accordingly, the propagation velocities ($Ce_n$) through the return paths in the respective measurement spaces ($A_n$) can be expressed by the following Equation (B).

$$Ce_n = C0 + \alpha \times t_n - V_n \ldots (B)$$

Based on Equations (A) and (B) described above, the wind velocities in the respective measurement spaces ($A_n$) can be expressed by the following Equation (C).

$$V_n = (Cd_n - Ce_n)/2 \ldots (C)$$

By substituting the propagation velocities ($Cd_n$) through the outward paths in the respective measurement spaces ($A_n$) obtained by the Equation expressed by [Math 1] and the propagation velocities ($Ce_n$) through the return paths in the respective measurement spaces ($A_n$) obtained by the Equation expressed by [Math 2] into Equation (C), the wind velocities ($V_n$) in the respective measurement spaces ($A_n$) can be obtained.

-How to Calculate Temperature-

In step ST9, the calculation unit (62) calculates the temperatures ($t_n$) in the respective measurement spaces ($A_n$) based on the wind velocities ($V_n$) in the respective measurement spaces ($A_n$) obtained in step ST8. Here, the temperatures ($t_n$) in the respective measurement spaces ($A_n$) can be obtained by substituting the wind velocities ($V_n$) and the propagation velocities ($Cd_n$) through the outward paths in the respective measurement spaces ($A_n$) obtained by the equations expressed by [Math 1] into Equation (A). Alternatively, the temperatures ($V_n$) in the respective measurement spaces ($A_n$) can be obtained by substituting the wind velocities ($V_n$) and the propagation velocities ($Ce_n$) through the return paths in the respective measurement spaces ($A_n$) obtained by the equations expressed by [Math 2] into Equation (B).

-Advantages of Embodiment-

Each of the receivers (40) according to the embodiment has a directivity with respect to a sound wave incident at a predetermined incident angle. Accordingly, the receiver (40) receives, with a high sensitivity, the sound wave incident at the predetermined incident angle, which leads to accurate measurement of the propagation time through each propagation path ($P_m$). As a result, the environment condition measurement device (1) accurately measures the environmental conditions, such as a wind velocity and a temperature.

Each of the transmitters (30) is omni-directional and emits sound waves across a predetermined angle range. This increases the number of propagation paths ($P_m$) passing through the measurement spaces ($A_n$). This results in more accurate measurement of the propagation time. In addition, the sound waves emitted from the transmitter (30) can be sent as reflected waves to the receiver (40).

Each of the receivers (40) has directivities with respect to respective sound waves through a plurality of propagation paths ($P_m$) and with incident angles different from each other. Accordingly, a single receiver (40) receives a plurality of sound waves with different incident angles at the same time, which leads to quick measurement of the propagation time of the sound waves. During long-time measurement of the propagation time, the environmental conditions, such as the temperature and the wind velocity, may change. With a change in the environmental conditions, the propagation time also varies. The processing (i.e., the first processing) of obtaining the propagation time needs thus to be as short as possible. This embodiment requires a shorter time period for the first processing as described above, which leads to more accurate measurement of the propagation time.

The storage (61) stores the propagation paths ($P_m$) and the incident angles associated with the propagation paths ($P_m$). Accordingly, the first processing allows the association of the propagation paths ($P_m$) with the propagation times through the propagation paths ($P_m$) using the incident angles based on such data. This results in quick obtainment of the propagation times through the propagation paths ($P_m$).

The controller (60) measures the environmental conditions based on the propagation time at satisfaction of a first condition that an index indicating the difference between the propagation times obtained in the plurality of times of the first processing is smaller than a predetermined value (steps ST7 to ST9). On the contrary, failing to satisfy the first condition, the controller (60) does not measure the environmental conditions based on the propagation time obtained in the latest first processing. Accordingly, the controller (60) obtains the propagation time at stable wind velocity, temperature, and the like, resulting in more accurate measurement of the environmental conditions.

Including a plurality of receivers (40), the environment condition measurement device (1) may have more propagation paths ($P_m$) passing through the measurement spaces ($A_n$). In addition, including a plurality of transmitters (30), the environment condition measurement device (1) can have more propagation paths ($P_m$) passing through the measurement spaces ($A_n$). Accordingly, the controller (60) measures the environmental conditions more accurately.

In each of the units (20), the transmitter (30) and the receiver (40) are located substantially at the same position. Accordingly, the propagation velocities of the sound waves through the outward and return paths of the propagation paths ($P_m$) can be obtained, and based on the difference, the wind velocity in the measurement space ($A_n$) can be obtained.

As shown in FIG. 5, the plurality of transmitters (30) transmit sound waves at different timings from each other.

This configuration reduces the interference among the sound waves when being received by the receivers (40). As a result, the environment condition measurement device (1) measures the environmental conditions more accurately.

Each of the transmitters (30) transmits, as sound waves, a group of a plurality of (e.g., four) sound waves. This increases the data for obtaining the propagation time through each propagation path ($P_m$) and thus allows the environment condition measurement device (1) to measure the environmental conditions more accurately.

-Variations of Embodiment-

<First Variation>

The controller (60) according to the embodiment described above calculates the wind velocity and temperature based on the propagation times of the sound waves through the outward and return paths of the propagation paths ($P_m$). However, the controller (60) may calculate the wind velocity and temperature based only on the propagation time of the sound waves from one to another of the propagation paths ($P_m$).

As schematically shown in FIG. 8, the environment condition measurement device (1) according to a first variation includes two transmitters (30) and eight receivers (40). The indoor space (10) is divided into four measurement spaces ($A_n$). The sound waves transmitted from each of the transmitters (30) pass through four propagation paths ($P_m$) and are received by the corresponding receivers (40).

The first propagation path ($P_m$) has the total length ($L_1$) of $d_{11}$. The second propagation path ($P_m$) has the total length (L2) of $d_{21} + d_{22}$. The third propagation path ($P_m$) has the total length (L3) of $d_{31} + d_{32} + d_{33}$. The fourth propagation path ($P_4$) has the total length (L4) of $d_{41} + d_{42} + d_{43} + d_{44}$. The fifth propagation path ($P_5$) has the total length (L5) of $d_{54} + d_{53} + d_{52} + d_{51}$. The sixth propagation path (Pe) has the total length (L6) of $d_{64} + d_{63} + d_{62}$. The seventh propagation path ($P_7$) has the total length (L7) of $d_{74} + d_{73}$. The eighth propagation path ($P_8$) has the total length (L8) of $d_{84}$.

The following relational equations [Math 3] hold, where ($T_m$) (where m = 1 to 8) represents the propagation times through the propagation paths ($P_m$) measured in the first processing and ($C_n$) (where n = 1 to 4) represents the propagation velocities in the respective measurement spaces ($A_n$).

[Math 3]

$$\begin{pmatrix} T_1 \\ T_2 \\ T_3 \\ T_4 \\ T_5 \\ T_6 \\ T_7 \\ T_8 \end{pmatrix} = \begin{pmatrix} d_{11} & 0 & 0 & 0 & 0 & 0 & 0 & 0 \\ d_{21} & d_{22} & 0 & 0 & 0 & 0 & 0 & 0 \\ d_{31} & d_{32} & d_{33} & 0 & 0 & 0 & 0 & 0 \\ d_{41} & d_{42} & d_{43} & d_{44} & 0 & 0 & 0 & 0 \\ 0 & 0 & 0 & 0 & d_{51} & d_{52} & d_{53} & d_{54} \\ 0 & 0 & 0 & 0 & 0 & d_{62} & d_{63} & d_{64} \\ 0 & 0 & 0 & 0 & 0 & 0 & d_{73} & d_{74} \\ 0 & 0 & 0 & 0 & 0 & 0 & 0 & d_{84} \end{pmatrix} \begin{pmatrix} 1/C_1 \\ 1/C_2 \\ 1/C_3 \\ 1/C_4 \\ 1/C_5 \\ 1/C_6 \\ 1/C_7 \\ 1/C_8 \end{pmatrix}$$

The propagation velocities ($C_n$) can be expressed by the following Equation (D).

$$C_n = C0 + \alpha \times t_n + V_n \ldots \text{(D)}$$

Based on the equations expressed by [Math 3] and Equation (D), eight simultaneous equations with eight unknowns (temperatures ($t_n$) (where n = 1 to 4) and wind velocities ($V_n$) (where n = 1 to 4)) hold. With the use of the least squares, for example, based on these simultaneous equations, the temperatures ($t_n$) and the wind velocities ($V_n$) can be obtained in one ways of the propagation paths ($P_m$).

<Second Variation>

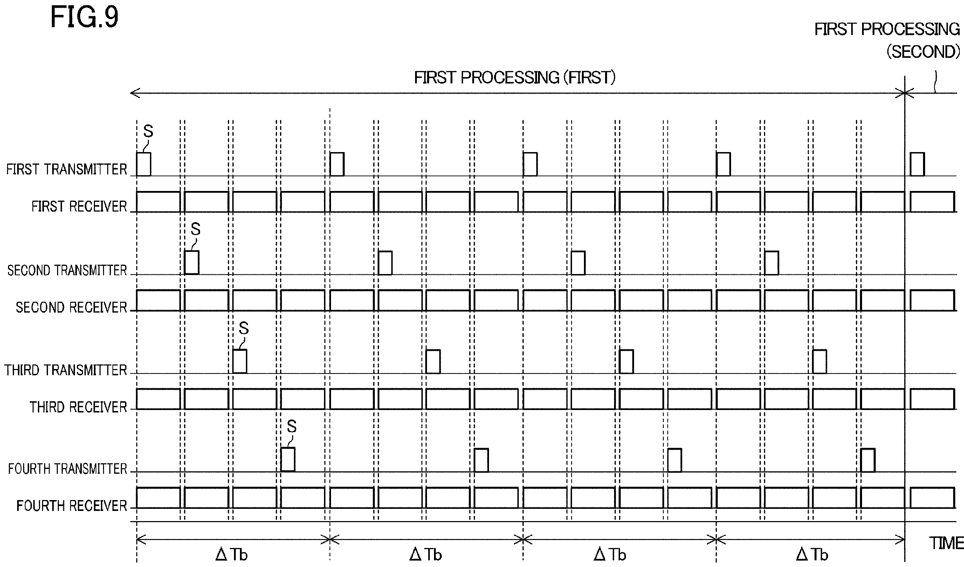

In the embodiment described above, each of the transmitters (30) transmits a group of sound waves consisting of a plurality of sound waves in the first processing. By contrast, in the first processing according to a second variation shown in FIG. 9, the transmitters (30) sequentially transmit one sound wave in each cycle of ∆Tb. The second variation

repeatedly executes this cycle four times, but may execute a smaller number of cycles. A smaller number of cycles reduces the time period for obtaining the propagation times.

<Third Variation>

The transmitters (30) according to the embodiment described above transmit sound waves with the same frequency at different times in the first processing. By contrast, the transmitters (30) according to a third variation transmit sound waves with different frequencies at the same time in the first processing. This reduces the time period for obtaining the propagation times.

The sound waves transmitted from the transmitters (30) at the same time may interfere with each other and become indistinguishable after being received by the receivers (40). However, the transmitters (30) according to the third variation transmit sound waves with different frequencies which are thus distinguishable after being received by the receivers (40). This reduces a decrease in the accuracy in measuring the environmental conditions.

<Fourth Variation>

The transmitters (30) according to the embodiment described above transmit sound waves with the same frequency at different times in the first processing. By contrast, the transmitters (30) according to a fourth variation transmit sound waves, which are pseudorandom signals, at the same time in the first processing. This reduces the time period for obtaining the propagation times.

Here, the pseudorandom signals include maximum-length sequence (M-sequence) signals, Barker coded signals, Golay coded signals, and other signals. The transmitters (30) according to the fourth variation transmit M-sequence signals as the pseudorandom signals. The M-sequence signals are random waves distinguishable by correlation processing.

In the first processing, the M-sequence signals transmitted from the transmitters (30) are received by the receivers (40). The controller (60) obtains a peak value of the correlation value of each M-sequence signal by correlation processing. The time with this peak value corresponds to the time at which the M-sequence signal reaches associated one of the receivers (40). The controller (60) obtains, as the propagation time, the time from when the associated transmitter (30) transmits the sound waves to the time at the peak value.

The sound waves transmitted from the transmitters (30) at the same time may interfere with each other and become indistinguishable after being received by the receivers (40). However, since the transmitters (30) according to the fourth variation transmit M-sequence signals, the sound waves received by the receivers (40) are distinguishable. This reduces a decrease in the accuracy in measuring the environmental conditions.

<<Other Embodiments>>

The above-described embodiment and variations may also be configured as follows.

The number of receivers (40) may be other than four, including singular.

The number of transmitters (30) may be one or other than four. The transmitters (30) are not necessarily omnidirectional transmitters but may be directional transmitters (30). A plurality of directional transmitters (30) may emit sound waves at different angles.

The number of units (20) may be one or other than four.

The receivers (40) and the transmitters (30) are not necessarily included in units but may be arranged separately.

The environment condition measurement device (1) may measure the environmental conditions other than the wind velocity and the temperature. The environment condition measurement device (1) may measure, as an environmental condition, the pressure in the target space (10).

In step ST7, the controller (60) may determine whether to measure the environmental conditions based on an index indicating the changes among the propagation times obtained in three or more times of the first processing.

The environment condition measurement device (1) does not necessarily include the coordinate measurer (50). For example, an operator measures three-dimensional coordinates indicating the shape of the target space (10) or the positions of the receivers (40) and the transmitters (30) in advance. The environment condition measurement device (1) may include a setting unit configured to set the measured three-dimensional coordinates. The controller (60) obtains the propagation time based on the data set in the setting unit.

At least part of the controller (60) may be included in any of the units (20), the transmitters (30), the receivers (40), or other elements or may be provided on a server of a network.

While the embodiment and variations thereof have been described above, it will be understood that various changes in form and details may be made without departing from the spirit and scope of the claims. The foregoing embodiment and variations thereof may be combined or replaced with each other without deteriorating the intended functions of the present disclosure. The expressions of "first," "second," ... described above are used to distinguish the terms to which these expressions are given, and do not limit the number and order of the terms.

INDUSTRIAL APPLICABILITY

As described above, the present disclosure is useful as an environment condition measurement device.

DESCRIPTION OF REFERENCE CHARACTERS

Pm   Propagation Path
1    Environment Condition Measurement Device
10   Indoor Space (Target Space)
30   Transmitter
40   Receiver
60   Controller
61   Storage

**Claims**

1. An environment condition measurement device comprising:

   a transmitter (30) configured to transmit a sound wave to a target space (10);
   a receiver (40) configured to receive the sound wave transmitted by the transmitter (30); and
   a controller (60) configured to obtain an environmental condition of the target space (10) based on a propagation time from when the transmitter (30) transmits the sound wave to when the receiver (40) receives the sound wave,
   the receiver (40) being a directional receiver with a directivity with respect to a sound wave incident at a predetermined incident angle.

2. The environment condition measurement device of claim 1, wherein
   the receiver (40) has directivities with respect to respective sound waves through a plurality of propagation paths ($P_m$) and with incident angles different from each other.

3. The environment condition measurement device of claim 1 or 2, further comprising:
   a storage (61) configured to store data on the plurality of propagation paths ($P_m$) and the incident angles for the plurality of propagation paths ($P_m$) in association with each other.

4. The environment condition measurement device of claim 3, wherein
   the controller (60) executes first processing of obtaining a propagation time of a sound wave according to an incident angle on the receiver (40) based on the data stored in the storage (61).

5. The environment condition measurement device of any one of claims 1 to 4, wherein
   the controller (60) repeatedly executes the first processing a plurality of times and obtains the environmental condition of the target space (10) based on the propagation times obtained in the plurality of times of the first processing, at satisfaction of a condition that an index indicating a difference between the propagation times of the sound wave obtained in the plurality of times of the first processing is smaller than a predetermined value.

6. The environment condition measurement device of any one of claims 1 to 5, wherein

   the receiver (40) includes a plurality of receivers (40), and
   the controller (60) obtains the environmental condition of the target space (10) based on propagation times of sound waves received by the plurality of receivers (40).

7. The environment condition measurement device of any one of claims 1 to 6, wherein

   the transmitter (30) includes a plurality of transmitters (30), and

the plurality of transmitters (30) transmit sound waves at different timings from each other.

8. The environment condition measurement device of any one of claims 1 to 6, wherein

   the transmitter (30) includes a plurality of transmitters (30), and
   the plurality of transmitters (30) generate, at a same timing, sound waves with frequencies different from each other or sound waves of pseudorandom signals.

9. The environment condition measurement device of any one of claims 1 to 8, wherein
   the environmental condition is at least one of a wind velocity or an air temperature.

# FIG.1

# FIG.2

# FIG.3

# FIG.4

MEASUREMENT OPERATION

START

ST1 — ARE INITIAL SETTINGS COMPLETE? — YES

NO

INITIAL SETTINGS

ST2 — MEASURE AND STORE SHAPE OF SPACE AND POSITIONS OF UNITS

ST3 — DETERMINE AND STORE MEASUREMENT SPACES AND PROPAGATION PATHS

ST4 — CALCULATE AND STORE PROPAGATION PATH LENGTHS AND INCIDENT ANGLES

ST5 — FIRST PROCESSING

ST6 — EXECUTE FIRST PROCESSING AGAIN

ST7 — IS INDEX INDICATING DIFFERENCE BETWEEN PROPAGATION TIMES SMALLER THAN PREDETERMINED VALUE? — NO

YES

ST8 — CALCULATE WIND VELOCITY

ST9 — CALCULATE TEMPERATURE

RETURN

# FIG.5

FIRST PROCESSING (FIRST)

FIRST PROCESSING (SECOND)

FIRST TRANSMITTER

FIRST RECEIVER

SECOND TRANSMITTER

SECOND RECEIVER

THIRD TRANSMITTER

THIRD RECEIVER

FOURTH TRANSMITTER

FOURTH RECEIVER

$\Delta Tc$  $\Delta Tc$  $\Delta Tc$  $\Delta Tc$

$\Delta Tb$  $\Delta Tb$  $\Delta Tb$  $\Delta Tb$

TIME

EP 4 202 386 A1

FIG.6

## FIG.7

## FIG.8

# FIG.9

EP 4 202 386 A1

## INTERNATIONAL SEARCH REPORT

International application No.

**PCT/JP2021/038667**

### A. CLASSIFICATION OF SUBJECT MATTER

*G01K 11/24*(2006.01)i; *G01N 29/024*(2006.01)i; *G01P 5/24*(2006.01)i
FI:  G01K11/24; G01P5/24 B; G01N29/024

According to International Patent Classification (IPC) or to both national classification and IPC

### B. FIELDS SEARCHED

Minimum documentation searched (classification system followed by classification symbols)

G01K11/22-11/26; G01P5/24; G01N29/024; G01D21/00-21/02; F24F11/00-11/89

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2020/0072680 A1 (NXP B.V.) 05 March 2020 (2020-03-05) paragraphs [0055]-[0069], fig. 1 | 1–4, 9 |
| Y | | 5-8 |
| Y | JP 2010-223855 A (PANASONIC CORP) 07 October 2010 (2010-10-07) paragraph [0015], fig. 2 | 5-8 |
| Y | WO 2020/110393 A1 (PIXIE DUST TECH INC) 04 June 2020 (2020-06-04) paragraphs [0198]-[0199], fig. 11,18, 25 | 6–8 |
| Y | JP 7-280666 A (ISHIKAWAJIMA HARIMA HEAVY IND CO LTD) 27 October 1995 (1995-10-27) paragraphs [0026], [0027], fig. 3 | 6–8 |

☐ Further documents are listed in the continuation of Box C.     ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **22 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/038667**

| Patent document cited in search report | | | Publication date (day/month/year) | Patent family member(s) | | | Publication date (day/month/year) |
|---|---|---|---|---|---|---|---|
| US | 2020/0072680 | A1 | 05 March 2020 | EP | 3617678 | A1 | |
| | | | | CN | 110873612 | A | |
| JP | 2010-223855 | A | 07 October 2010 | (Family: none) | | | |
| WO | 2020/110393 | A1 | 04 June 2020 | (Family: none) | | | |
| JP | 7-280666 | A | 27 October 1995 | (Family: none) | | | |

Form PCT/ISA/210 (patent family annex) (January 2015)

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H11173925 A